Europäisches Patentamt

European Patent Office

Office européen des brevets

(19)

(11) Numéro de publication : **0 110 762**
**B1**

(12)

# FASCICULE DE BREVET EUROPÉEN

(45) Date de publication du fascicule du brevet :
**27.05.87**

(21) Numéro de dépôt : **83402204.8**

(22) Date de dépôt : **16.11.83**

(51) Int. Cl.⁴ : **C 09 C  1/30**, C 09 D 17/00

(54) **Procédé pour améliorer les propriétés rhéologiques d'une suspension de silice précipitée.**

(30) Priorité : **24.11.82 FR 8219646**

(43) Date de publication de la demande :
**13.06.84 Bulletin 84/24**

(45) Mention de la délivrance du brevet :
**27.05.87 Bulletin 87/22**

(84) Etats contractants désignés :
**AT BE CH DE FR GB IT LI LU NL SE**

(56) Documents cités :
**FR-A-   844 855**
**FR-A- 2 286 793**
**US-A- 3 291 626**
**US-A- 4 036 663**
**CHEMICAL ABSTRACTS, volume 81, no. 8, 26 août**
**1974, page 99, abrégé 39081z (COLUMBUS, OHIO, US)**

(73) Titulaire : **RHONE-POULENC CHIMIE DE BASE**
**25, quai Paul Doumer**
**F-92408 Courbevoie (FR)**

(72) Inventeur : **Jas, Jean-Noel**
**27, avenue Simon Rousseau**
**F-69270 Fontaine/Sur/Saone (FR)**

(74) Mandataire : **Martin, Henri et al**
**RHONE-POULENC INTERSERVICES Service Brevets**
**Chimie 25, quai Paul Doumer**
**F-92408 Courbevoie Cédex (FR)**

## Description

La présente invention a trait à un procédé pour améliorer les propriétés rhéologiques d'une suspension de silice précipitée, et notamment sa stabilité.

Elle s'applique à un procédé pour l'obtention d'une suspension de silice riche en matières sèches, à partir d'un gâteau de filtration.

On sait en effet que le processus d'obtention d'une silice précipitée par voie humide implique la formation d'un gel, rupture du gel et obtention d'une suspension de silice qui est filtrée, lavée et délitée.

Cette suspension doit ensuite être séchée et un moyen commode, au moins en apparence, consiste à atomiser cette suspension.

Malheureusement l'opération d'atomisation oblige à mettre en œuvre une suspension pulvérisable.

Pour ce faire on a proposé plusieurs procédés :

— se limiter à des extraits secs faibles en silice dans le gâteau de filtration, ce qui conduit à une grande consommation d'énergie de séchage, en raison des dilutions,

— acidifier le gâteau de filtration, ce qui présente des difficultés en application caoutchouc, dans laquelle on doit être proche de la neutralité (cf. US 3 208 823),

— faire appel à un système mécanique plus ou moins compliqué de délitage et de toute façon grand consommateur d'énergie pour diminuer la viscosité du gâteau de filtration.

Aussi dans FR-A-7 909 403 (2 453 880), on a revendiqué un produit à caractéristiques améliorées qui peut être obtenu en atomisant une suspension de pH supérieur à 4, avantageusement compris entre 4,5 et 6.

Toutefois le procédé décrit est limité d'un point de vue industriel, dans sa mise en œuvre. En effet la stabilité d'une suspension de silice diminue lorsque l'on s'éloigne du point isoélectrique c'est-à-dire pratiquement lorsque le pH devient supérieur à 3,5-4.

Ceci constitue bien évidemment une contrainte puisque l'on ne peut pas conserver la suspension sans agitation.

Par ailleurs, on connaît par le document FR-A-2 286 793 un procédé permettant d'obtenir une suspension de silice atomisable. Toutefois, ce procédé nécessite un dispositif répondant à des caractéristiques bien spécifiques ainsi que l'utilisation d'un agent acide pour maintenir la suspension à un pH à un maximum de 4,0. Un agent acide peut avoir des conséquences néfastes sur les propriétés de la silice finie.

La présente invention vise à pallier à ces difficultés en proposant un procédé d'obtention d'une suspension riche en matière sèche, aux propriétés rhéologiques améliorées, facilement pulvérisable et stable dans le temps.

Le procédé selon la présente invention permet d'obtenir des suspensions stables de silice précipitée, riches en matière sèche, et à un pH pratiquement supérieur à la valeur de 3,5-4.

Dans ce but, le procédé selon l'invention d'obtention d'une suspension stable et pulvérisable de silice précipitée présentant plus de 15 % de matière sèche et un pH compris entre notamment 3,5 et 7,5 est caractérisé par le fait que l'on ajoute une solution d'aluminate de sodium à un gâteau de filtration, lors du délitage de celui-ci, en maintenant le milieu homogène pendant l'addition d'aluminate de sodium.

Cet apport doit être réalisé de manière à obtenir le pH désiré, tout en ne perturbant pas les opérations du processus de précipitation de la silice.

Il convient en résumé de tenir compte :

— du pH initial et final de la suspension désirée

— des caractéristiques de produit final

— des propriétés rhéologiques, initiales et finales de la suspension.

Pratiquement le pH final de la suspension varie de 3,5 à 7,5 et de préférence de 5 à 7,5.

Le taux de matière sèche est variable.

Pour des raisons économiques et techniques l'on sait que l'on a intérêt à faire appel à des quantités importantes de matière sèche. Le procédé de l'invention permet d'obtenir des suspensions à plus de 15 % de matière sèche, et de préférence plus de 20 %.

Selon une forme préférentielle l'aluminate de sodium, est sous forme d'une solution riche en $Na_2O$.

Selon une variante de l'invention on peut laver le gâteau par une eau acidifiée puis remonter son pH lors du délitage avec une solution d'aluminate.

Pratiquement la quantité d'alumine, exprimée en alumine anhydre rapportée à la quantité de silice anhydre est de 500 à 7 000 ppm. Cet apport doit se faire de manière homogène.

Les suspensions selon l'invention peuvent servir à la fabrication de silice pulvérulente.

Mais elles sont particulièrement adaptées à l'obtention de microperles selon EP-A-18 866 c'est-à-dire :

— de taille de particules (ou microperles) moyenne supérieure à 150 μm et de préférence comprise entre 200 et 300 μm

— de densité de remplissage à l'état tassé selon norme AFNOR 30042 supérieure à 0,200 de préférence comprise entre 0,28 et 0,32

— de surface BET comprise entre 100 et 350 m²/g

— de surface CTAB comprise entre 100 et 350 m²/g.

La surface spécifique BET est déterminée selon la méthode de Brunauer-Emmett-Teller décrite dans The Journal of the American Chemical Society, vol. 60 p. 309 février 1938.

La surface CTAB : surface externe par adsorption de bromure de céthyl triméthyl ammonium à pH 9 selon la méthode exposée par Jay, Janzen et G. Kraus dans Rubber Chemistry and Technology *44* (1971) p. 1287-1296.

Ces produits présentent une fluidité remarquable de l'ordre de quelques secondes, améliorée, par rapport aux produits en poudre correspondant, d'un facteur multiplicatif sensiblement compris entre 10 et 50. Il s'ensuit que le produit ne poussière pas lors de la manipulation des compositions pour vulcanisats dans un mélangeur.

## Exemples

### . Exemple 1

1. A 25 kg d'un gâteau de filtration de silice à 22 % d'extrait sec de pH = 4,8, à 3 % de $Na_2SO_4$, on additionne progressivement en 25 minutes un aluminate $Al_2O_3$, $2Na_2O$ sous forme d'une solution à 115 g/l d'$Al_2O_3$ et 140 g/l de NaO jusqu'à l'obtention d'un pH de 6,15 en maintenant le milieu homogène au cours de l'addition. Soit 800 ppm d'$Al_2O_3$ ajoutés à la suspension de la silice d'anhydre contenue dans le gâteau, comptés par rapport à la silice anhydre.

On note une très nette diminution de la viscosité de la suspension obtenue qui passe de 26,8 à 2,4 Pa · s.

### Exemple 2

2. On part du gâteau précédent, on réduit la viscosité par addition d'acide jusqu'à pH = 2,7, la viscosité obtenue est de 0,08 Pa · s.

On remonte alors le pH à la même valeur de 4,8 par addition de l'aluminate précédent, on obtient une viscosité de 8 Pa · s.

On continue jusqu'à pH = 6,2, on obtient une viscosité de 0,6 Pa · s. (ce qui correspond à un ajout de 3 000 ppm d'alumine).

Les viscosités sont mesurées au viscosimètre Brookfield RVT à 5 tours, à la température de 40 °C.

### Exemple 3

3. Cet exemple a pour but de montrer que l'intérêt du moyen de l'invention est d'autant plus grand que la quantité d'extrait sec est plus élevée. On part de 25 kg de gâteau dont l'extrait sec est de 22,8 % le taux de sulfate $Na_2SO_4$ = 1,3 le pH est de 5,15, à une température de 36 °C la viscosité mesurée précédemment est de 68 Pa · s.

On additionne le même aluminate jusqu'à un pH de 6,75 (soit un ajout équivalent à 1 200 ppm), on obtient une viscosité de 11,8 Pa · s.

On ramène à 19,7 % d'extrait sec par dilution par l'eau, la viscosité passe à 2,5 Pa · s., et l'addition d'aluminate pour retrouver le même pH que précédemment permet de stabiliser le gâteau à la même viscosité.

### Exemple 4

4. On prépare une silice sous forme de microperle selon EP-A-18 866 pour utilisation en caoutchouc.

On prépare une silice de pH = 6,1 en partant de 250 kg d'un gâteau de silice de pH = 4,4 extrait sec 22 % et taux de sulfate 2,6 % et on ajoute 1 500 ppm d'alumine sous forme d'aluminate.

Les chiffres donnés correspondent à une moyenne sur 20 essais.

Après atomisation dans une buse à pression de liquide on obtient le produit de caractéristiques suivantes.

La surface CTAB = 177 m²/g

La surface BET = 180 m²/g

Taille moyenne des particules = 200 μm

Densité à l'état tassé = 0,3 (AFNOR 30042)

On a testé les microperles ainsi obtenues en caoutchouc avec la formulation suivante :

| | |
|---|---|
| SBR 1509 | 90,00 |
| PEG 4000 | 3,00 |
| Acide stéarique | 3,00 |
| Oxyde de zinc | 3,00 |
| Antioxygène PERMANAX® OD | 2,00 |
| Mélange maître A | 7,25 |

# 0 110 762

| | |
|---|---|
| Mélange maître B | 7,25 |
| Silice | 50,00 |

Dans cette formule les différents produits répondent aux formules chimiques et/ou normes suivantes :

SBR 1509 : Butadiène Styrène Rubber — voir page 25 The Synthetic Rubber Manual 76e édition
PEG 4000 : Polyéthylène glycol avec masse moléculaire env. 4000.
Antioxygène PERMANAX® OD — Diphénylamine octylée
VULCAFOR® DOTG — Diortholylguanidine
VULCAFOR® MBTS — Disulfure de benzothiazyle

Mélange maître A (accélérateurs)

| | |
|---|---|
| SBR | 5 |
| MBTS | 0,75 |
| DOTG | 1,5 |
| | 7,25 |

Mélange maître B (soufre)

| | |
|---|---|
| SBR | 4,75 |
| Soufre | 2,5 |
| | 7,25 |

Les résultats obtenus sont les suivants :

| | |
|---|---|
| $Cm =$ | 10 |
| $CM =.$ | 86 |
| $T_{90} =$ | 9 mn 45 s |
| Résistance rupture | 19,6 MPa |
| Allongement rupture % | 695 |
| Déchirement pantalon | 22 kN/m |
| Module 300 % | 4 MPa |
| Dureté Shore A | 70 |

Si on compare à un produit témoin sur un gâteau à pH = 4,8 mais non traité selon l'invention, on obtient :

| | |
|---|---|
| BET | 173 m²/g |
| CTAB | 172 m²/g |
| Taille des particules | 200 μm |
| $Cm =$ | 11 |
| $CM =$ | 85 |
| $T_{90} =$ | 9 mm 30 s |
| Résistance rupture | 20,2 MPa |
| Allongement rupture | 720 % |
| Déchirement pantalon | 21,4 kN/m |
| Module 300 % | 4,3 MPa |
| Dureté Shore | 70 |

Ces produits sont donc comparables.
Les tests en caoutchouc correspondent aux normes suivantes :
Rhéomètre Monsanto ASTM D 2084
— couple minimal Cm
— couple maximal CM
Résistance rupture  ASTM D 412-51 T
Module à 300 %
Allongement %  ASTM D 412-51 T
Déchirement pantalon  NFT 47-126

4

Dureté Shore A        ASTM D 2240-75

## Revendications

1. Procédé d'obtention d'une suspension stable et pulvérisable de silice précipitée présentant plus de 15 % de matière sèche et un pH compris entre notamment 3,5 et 7,5, caractérisé par le fait que l'on ajoute une solution d'aluminate de sodium à un gâteau de filtration, lors du délitage de celui-ci, en maintenant le milieu homogène pendant l'addition d'aluminate de sodium.

2. Procédé selon la revendication 1, caractérisé par le fait que le pH est compris entre 5 et 7,5.

3. Procédé selon l'une des revendications 1 et 2, caractérisé par le fait que la quantité d'aluminium exprimée en alumine anhydre rapportée à la quantité de silice anhydre est de 500 à 7 000 ppm.

4. Application du procédé selon l'une des revendications 1 à 3 à l'obtention de suspensions pulvérisables de pH compris entre 3,5 et 7,5 et présentant plus de 15 % de matière sèche et de préférence plus de 20 %.

## Claims

1. A process for producing a stable sprayable suspension of precipitated silica having more than 15 % of dry matter and a pH-value of between in particular 3.5 and 7.5 characterised by adding a solution of sodium aluminate to a filter cake in the operation of desintegrating same, while maintaining the medium homogeneous during the addition of sodium aluminate.

2. A process according to claim 1 characterised in that the pH-value is between 5 and 7.5.

3. A process according to one of claims 1 and 2 characterised in that the amount of aluminium expressed in respect of anhydrous alumina in relation to the amount of anhydrous silica is from 500 to 7 000 ppm.

4. Use of the process according to one of claims 1 to 3 for the production of sprayable suspensions having a pH-value of between 3.5 and 7.5 and containing more than 15 % of dry matter and preferably more than 20 %.

## Patentansprüche

1. Verfahren zur Herstellung einer stabilen und pulverisierbaren Suspension von gefälltem Siliziumdioxid, die mehr als 15 % Trockensubstanz enthält und einen pH-Wert insbesondere zwischen 3,5 und 7,5 aufweist, dadurch gekennzeichnet, daß man zu einem Filterkuchen, bei dessen Zerfall durch Rühren, eine Lösung von Natriumaluminat zugibt, wobei man während der Zugabe des Natriumaluminats die Mischung homogen hält.

2. Verfahren nach Anspruch 1, dadurch gekennzeichnet, daß der pH-Wert zwischen 5 und 7,5 liegt.

3. Verfahren nach einem der Ansprüche 1 und 2, dadurch gekennzeichnet, daß die Menge des Aluminiums, ausgedrückt in wasserfreiem Aluminiumoxid, bezogen auf die Menge an wasserfreiem Siliziumdioxid 500 bis 7 000 ppm beträgt.

4. Verwendung des Verfahrens nach einem der Ansprüche 1 bis 3 zur Herstellung von pulverisierbaren Suspensionen mit einem pH-Wert zwischen 3,5 und 7,5 die mehr als 15 % Trockensubstanz, vorzugsweise mehr als 20 % Trockensubstanz, aufweisen.